(19) Europäisches Patentamt

European Patent Office

Office européen des brevets

(11) **EP 4 611 244 A1**

(12) **EUROPEAN PATENT APPLICATION**

(43) Date of publication:
03.09.2025 Bulletin 2025/36

(21) Application number: 25160579.6

(22) Date of filing: 27.02.2025

(51) International Patent Classification (IPC):
$H02M\ 3/335^{(2006.01)}$ $H02M\ 5/458^{(2006.01)}$
$H02M\ 7/483^{(2007.01)}$ $H02M\ 1/00^{(2006.01)}$

(52) Cooperative Patent Classification (CPC):
H02M 3/33569; H02M 1/007; H02M 1/0074;
H02M 3/33584; H02M 5/4585; H02M 7/4835

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.03.2024 US 202463560494 P

(71) Applicant: Delta Electronics, Inc.
Neihu, Taipei 11491 (TW)

(72) Inventors:
• Liu, Jian
Durham, NC 27709 (US)
• Wang, Ruxi
Durham, NC 27709 (US)
• Barbosa, Peter Mantovanelli
Durham, NC 27709 (US)

(74) Representative: Uexküll & Stolberg
Partnerschaft von
Patent- und Rechtsanwälten mbB
Beselerstraße 4
22607 Hamburg (DE)

(54) **SOLID-STATE TRANSFORMER**

(57) A solid-state transformer (100) is provided. The solid-state transformer (100) includes a first stage (1), a first DC bus (3) and a second stage (2). The first stage (1) is configured to receive an AC power and convert the AC power into a first DC power. The first DC bus (3) is electrically connected to the first DC power. The second stage (2) is electrically connected to the first stage (1) through the first DC bus (3), and is configured to perform isolated step-down DC/DC conversion on the first DC power to generate a second DC power. The first stage (1) is configured to operate at a modulation index (M) higher than 1, and the modulation index (M) is defined by a ratio of twice AC voltage provided by the AC power to voltage across the first DC bus (3).

FIG. 3

**Description**

FIELD OF THE INVENTION

The present disclosure relates to a solid-state transformer, and more particularly to a two-stage solid-state transformer.

BACKGROUND OF THE INVENTION

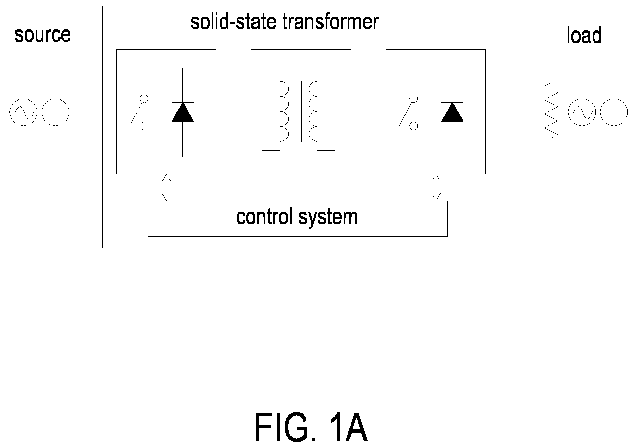

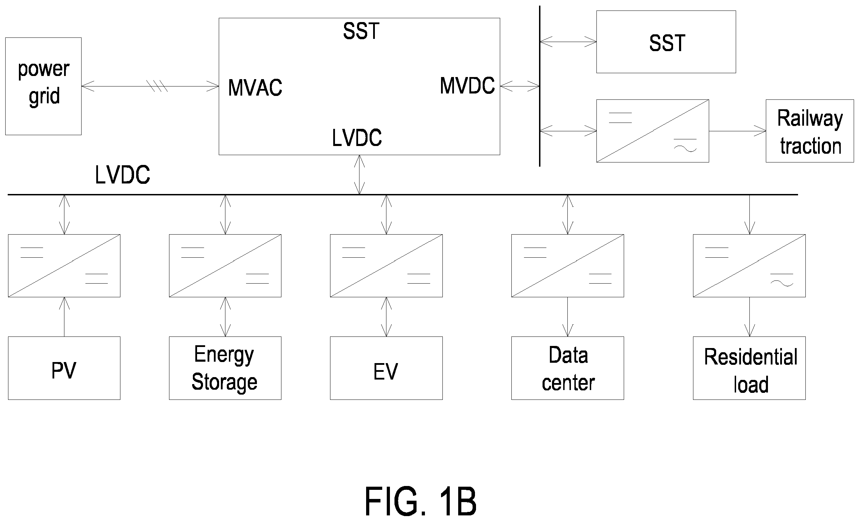

The conventional grid-connected converter usually adopts the grid interface of the line frequency transformer (LFT), which is formed by a large amount of material such as copper and iron and has a large volume. Therefore, the solid-state transformer (SST) in FIG. 1A is proposed by increasing the frequency of the transformer and adding additional solid-state devices. In this way, the volume of medium-frequency transformer (MFT) could shrink a lot. Moreover, solid-state devices provide more advanced functions such as voltage regulation, power flow control, grid-supporting, fault ride-through, and so on. As shown in FIG. 1B, SST can be used to interface MVAC (medium-voltage alternating current) grid and LVDC (low-voltage direct current) port such as renewable energy sources (e.g., photovoltaics (PV)), energy storage, electrical vehicle (EV), data center and residential load. It can also provide the MVDC (medium-voltage direct current) port for MVDC interconnection, such as railway traction and shipboard.

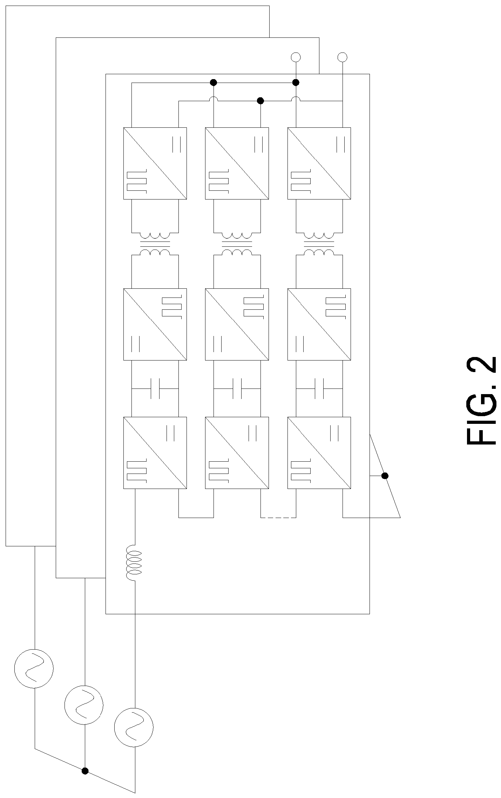

Up to now, the most famous and mature solid-state transformer topology for MVAC to LVDC applications is shown in FIG. 2. In order to handle high voltage, the cascade H-bridge (CHB) is adopted in MVAC side, while each isolated DC/DC converter is connected to a corresponding CHB DC port, which can be combined together and regarded as one SST module. Therefore, such a modular structure demonstrates good scalability, because the number of SST modules could be increased so that the SST can be applied to higher voltage cases.

Despite these benefits, it is still challenging to achieve high power density CHB-based SST for higher voltage classes such as 35 kV. The reason is that the AC/DC stage and isolated DC/DC stage are coupled together, where the MFT must withstand the voltage potential difference between the primary and secondary sides. When the voltage becomes higher, the larger creepage distance and insulation distance reduce the power density. A lot of space is wasted to meet high insulation requirements. Even worse, the AC grid fault such as a single-phase ground fault will cause higher phase-to-ground potential, which means the MFT insulation voltage should be higher due to the coupling between the AC/DC stage and the isolated DC/DC stage.

Therefore, there is a need of providing a solid-state transformer in order to overcome the drawbacks of the conventional technologies.

SUMMARY OF THE INVENTION

The present disclosure provides a solid-state transformer. The solid-state transformer includes a first stage and a second stage configured for performing AC/DC conversion and isolated DC/DC conversion, respectively. The first stage operates at a modulation index higher than 1 so that the insulation requirement for the second stage is reduced.

In accordance with an aspect of the present disclosure, a solid-state transformer is provided. The solid-state transformer includes a first stage, a first DC bus and a second stage. The first stage is configured to receive an AC power and convert the AC power into a first DC power. The first DC bus is electrically connected to the first DC power. The second stage is electrically connected to the first stage through the first DC bus, and is configured to perform isolated step-down DC/DC conversion on the first DC power to generate a second DC power. The first stage is configured to operate at a modulation index higher than 1, and the modulation index is defined by a ratio of twice AC voltage provided by the AC power to voltage across the first DC bus.

The above contents of the present disclosure will become more readily apparent to those ordinarily skilled in the art after reviewing the following detailed description and accompanying drawings, in which:

BRIEF DESCRIPTION OF THE DRAWINGS

FIG. 1A is a schematic block diagram illustrating a conventional system including a solid-state transformer;
FIG. 1B schematically shows applications of the conventional solid-state transformer;
FIG. 2 is a schematic circuit diagram illustrating a conventional solid-state transformer;
FIG. 3 is a schematic circuit diagram illustrating a solid-state transformer according to an embodiment of the present disclosure;
FIG. 4 is a schematic circuit diagram illustrating a solid-state transformer according to another embodiment of the present disclosure;

FIG. 5 schematically shows an implementation of the first stage of the solid-state transformer in the present disclosure;

FIG. 6A and FIG. 6B schematically show two possible implementations of the submodule in FIG. 5;

FIG. 7A schematically shows simulation waveforms of the bridge arm voltage of the upper or lower bridge arm of FIG. 5 under different modulation indexes;

FIG. 7B schematically shows simulation waveforms of the bridge arm current flowing through the upper or lower bridge arm of FIG. 5 under different modulation indexes;

FIG. 7C schematically shows simulation waveforms of the bridge arm energy of the upper or lower bridge arm of FIG. 5 under different modulation indexes;

FIG. 7D schematically shows a relationship between the energy storage requirement and the modulation index at unity power factor;

FIG. 8 schematically shows a flow chart of a zero-sequence current suppression method and corresponding architecture of a controller of the solid-state transformer according to an embodiment of the present disclosure;

FIG. 9 schematically shows the variation of bridge arm voltage of the upper or lower bridge arm of FIG. 5 when a single-phase-ground short circuit fault occurs on the AC side of the first stage;

FIG. 10 schematically shows a variant of the first stage of FIG. 5;

FIG. 11 schematically show another implementation of the submodule in FIG. 5;

FIG. 12 is a schematic circuit diagram illustrating a solid-state transformer according to another embodiment of the present disclosure;

FIG. 13A schematically shows the second stage of FIG. 12 with a two-wire output configuration;

FIG. 13B schematically shows the second stage of FIG. 12 with a three-wire output configuration;

FIG. 14A and FIG. 14B schematically show two possible implementations of the DC/DC conversion module of FIG. 13A;

FIG. 15A, FIG. 15B and FIG. 15C schematically show three possible implementations of the DC/DC conversion module of FIG. 13B;

FIG. 16 schematically shows a variant of the second stage of FIG. 13A;

FIG. 17A schematically shows another implementation of the second stage of the solid-state transformer of the present disclosure;

FIG. 17B schematically shows a variant of the second stage of FIG. 17A;

FIG. 17C is a schematic circuit diagram illustrating the switch module of the second stage of FIG. 17A and FIG. 17B;

FIG. 18A schematically shows another implementation of the first stage of the solid-state transformer in the present disclosure;

FIG. 18B schematically shows further another implementation of the first stage of the solid-state transformer in the present disclosure; and

FIG. 19A and FIG. 19B exemplify two possible implementations of the switch of the upper and lower bridge arm of FIG. 18A and FIG. 18B.

## DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

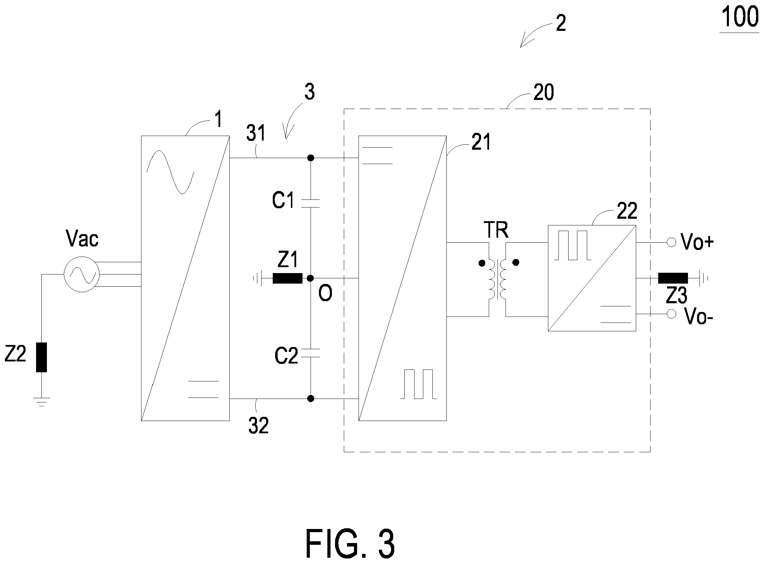

FIG. 3 is a schematic circuit diagram illustrating a solid-state transformer according to an embodiment of the present disclosure. The solid-state transformer 100 includes a first stage 1, a second stage 2, and a first DC bus 3. The first stage 1 is configured to receive an AC power from an AC source Vac and convert the AC power into a first DC power. In the embodiment, the first stage 1 is configured to convert a voltage of the AC power, AC power voltage, into a voltage of the first DC power, first DC power voltage. The second stage 2 is electrically connected to the first stage 1 through the first DC bus 3 and is configured to perform isolated step-down DC/DC conversion on the first DC power to generate a second DC power, wherein the second stage 2 is adapted to convert the first DC power voltage into a voltage of the second DC power, second DC power voltage. Further, the first stage 1 is configured to operate at a modulation index M higher than 1 so that an insulation voltage required for the second stage 2 is reduced. The modulation index M is defined by a ratio of twice AC voltage provided by the AC power to voltage across the first DC bus 3. In addition, the second stage 2 includes a DC/DC conversion module 20 with a transformer TR for isolation, and the transformer TR is for example but not limited to a medium-frequency transformer. The design of the first stage 1 and the second stage 2 could be decoupled and optimized independently. The first DC bus 3 is formed by a positive line 31 and a negative line 32.

In an embodiment, the AC source Vac provides a medium-voltage AC power, the first stage 1 includes a non-isolated MVAC/MVDC converter which converts the medium-voltage AC power into a medium-voltage DC power (first DC power), and the DC/DC conversion module 20 of the second stage 2 includes an isolated step-down MVDC/LVDC converter which converts the medium-voltage DC power into a low-voltage DC power (second DC power). It is noted that the specific voltage ranges of the foregoing high voltage, medium voltage and low voltage may be different in different technique fields and application. For example, the high voltage may be higher than 35kV, the medium voltage may be between 1kV and 35kV, and the low voltage may be lower than 1 kV.

In addition, the DC/DC conversion module 20 of the second stage 2 further includes a DC/AC conversion circuit 21 and an AC/DC conversion circuit 22. The transformer TR is coupled between the DC/AC conversion circuit 21 and the AC/DC conversion circuit 22. The output of the AC/DC conversion circuit 22 may be unipolar or bipolar and is connected to a positive terminal Vo+ and a negative terminal Vo- of a second DC bus. For example, the second DC bus may be connected to a low-voltage DC distribution grid, a distributed energy source, an energy storage system, or other flexible loads. Additionally, the first DC bus 3 may be connected to a medium-voltage DC distribution grid, but not limited thereto.

In an embodiment, the solid-state transformer 100 includes two capacitors C1 and C2 electrically connected in series across the first DC bus 3 and form a midpoint O therebetween. The midpoint O is grounded with an impedance Z1. Accordingly, an insulation voltage required for the transformer TR of the second stage 2 could be reduced to a half of the voltage across the first DC bus 3. In this embodiment, the midpoint O is further electrically connected to the DC/AC conversion circuit 21. In addition, the impedance between the AC source Vac and the ground terminal is represented by an impedance Z2. In an embodiment, a port of the output of the AC/DC conversion circuit 22 may be grounded with an impedance Z3.

Various grounding schemes can be adopted between the midpoint O and the ground terminal, such as solid grounding, low-impedance grounding, high-impedance grounding, resonant grounding or direct grounding. In an embodiment, the AC source Vac is provided by a substation, the grounding scheme adopted between the midpoint O and the ground terminal depends on the grounding scheme of the substation. For different areas around the world, the grounding scheme of the substation and the corresponding grounding scheme of the midpoint O may be different. For instance, when the substation provides MVAC and the first and second stages 1 and 2 perform MVAC/MVDC conversion and MVDC/LVDC conversion respectively, in North America, the grounding scheme of the substation may adopt solid-grounding or low-impedance grounding. Correspondingly, the midpoint O is ungrounded, or the grounding scheme of the midpoint O adopts high-impedance grounding. In China and Europe, the grounding scheme of the substation may adopt resonant grounding, or the substation may be ungrounded. Correspondingly, MVAC side adopts grounding transformer, and the midpoint O is ungrounded.

In addition, when the solid-state transformer 100 works in the islanding mode and is disconnected with the substation, the grounding scheme may be applied as the system functional grounding. For example, a high-voltage switch and a series low impedance grounding resistor may be connected to the midpoint O. Under the islanding mode, the high-voltage switch is closed, and the midpoint O becomes the new system functional grounding point.

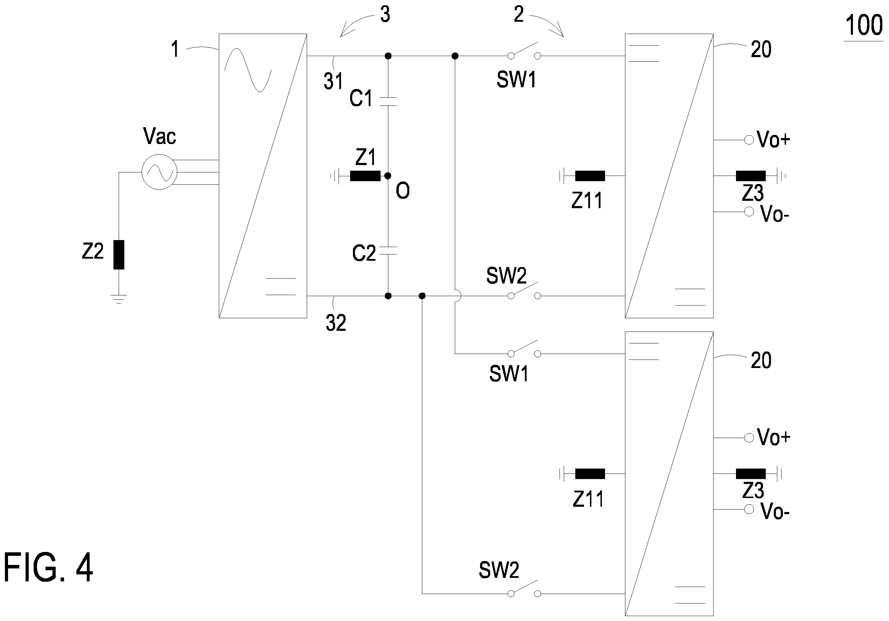

FIG. 4 is a schematic circuit diagram illustrating a solid-state transformer according to another embodiment of the present disclosure. The component parts and elements corresponding to those of FIG. 3 are designated by identical numeral references, and detailed descriptions thereof are omitted herein. In the solid-state transformer 100 of this embodiment, the second stage 2 may include multiple DC/DC conversion modules 20 (exemplified by two DC/DC conversion modules 20 in the figure). The input of each DC/DC conversion module 20 is electrically connected to the first DC bus 3, and the outputs of the multiple DC/DC conversion modules 20 may be electrically connected to different DC systems through different second DC buses. In other words, in this embodiment, the solid-state transformer 100 can interface different DC systems. In another embodiment, the outputs of the multiple DC/DC conversion modules 20 may be electrically connected to the same DC system through the same second DC bus. In an embodiment, the solid-state transformer 100 further includes switches SW1 and SW2 electrically connected between the first DC bus 3 and each DC/DC conversion module 20 of the second stage 2. The switches SW1 and SW2 may be controlled to enable or disable the DC/DC conversion module 20. In an aspect, the switches SW1 and SW2 may be used to isolate different DC/DC conversion modules 20. For example, when the short circuit failure happens at the output of one DC/DC conversion module 20, the corresponding switches SW1 and SW2 could be triggered to turn off for isolating this DC/DC conversion module 20, while the other DC/DC conversion modules 20 can still operate properly without influence. In addition, in this embodiment, the impedance between the primary side of the DC/DC conversion module 20 and the ground terminal is represented by the impedance Z11. It is noted that the impedances Z11 or Z3 corresponding to different DC/DC conversion modules 20 may be different.

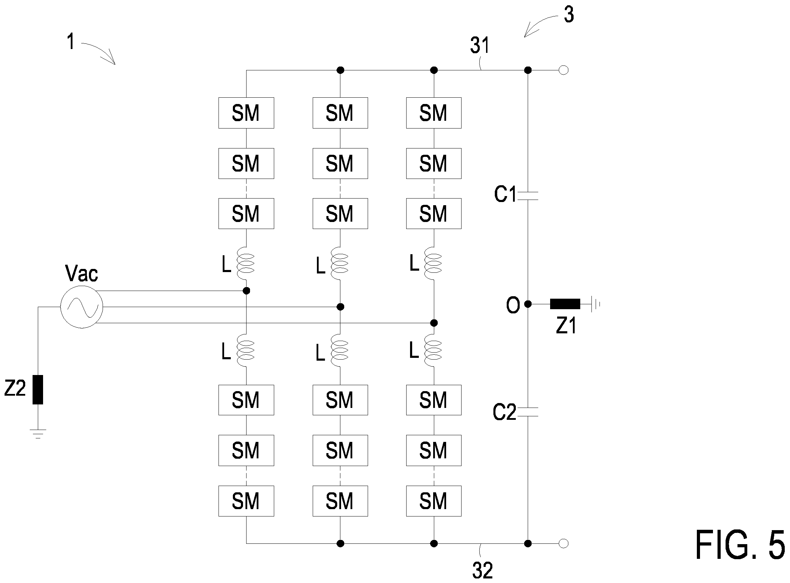

FIG. 5 schematically shows an implementation of the first stage of the solid-state transformer in the present disclosure. As shown in FIG. 5, in an embodiment, the first stage 1 includes a modular multilevel converter. In specific, the first stage 1 includes three upper bridge arms and three lower bridge arms. The three upper bridge arms are identical, and each upper bridge arm includes an inductor L and submodules SM electrically connected in series between the positive line 31 of the first DC bus 3 and the corresponding phase of the AC source Vac. The three lower bridge arms are identical, and each lower bridge arm includes an inductor L and submodules SM electrically connected in series between the negative line 32 of the first DC bus 3 and the corresponding phase of the AC source Vac.

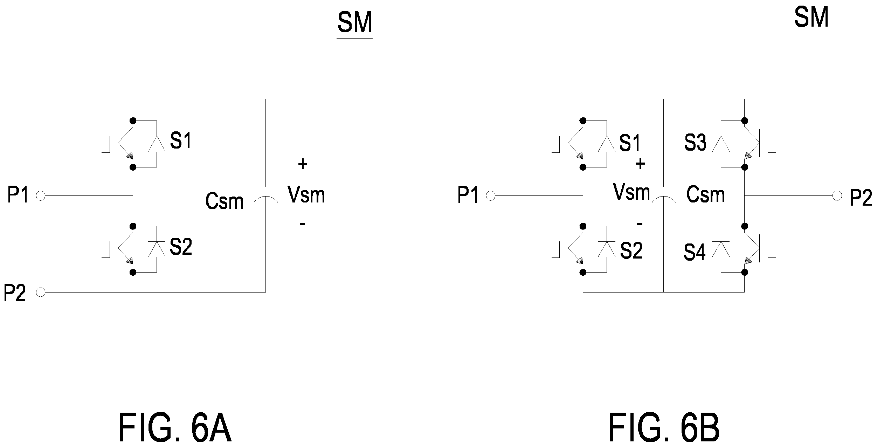

The submodule SM may be implemented by any suitable topology. FIG. 6A and FIG. 6B schematically show two possible implementations of the submodule in FIG. 5. In an embodiment, as shown in FIG. 6A, the submodule SM may be unipolar and includes a half-bridge circuit including switches S1 and S2 and a capacitor Csm. The switches S1 and S2 are serially connected to form a switch bridge electrically connected in parallel to the capacitor Csm. The connection node of the switches S1 and S2 is coupled to a port P1, and a negative terminal of the capacitor Csm is coupled to a port P2. In another embodiment, as shown in FIG. 6B, the submodule SM may be bipolar and includes a full-bridge circuit including switches S1, S2, S3, and S4 and a capacitor Csm. The bipolar submodule SM can generate negative arm voltage and block fault. The switches S1 and S2 are serially connected to form a first bridge arm, the switches S3 and S4 are serially connected to form a second bridge arm, and the first and second bridge arms and the capacitor Csm are electrically connected in parallel. The connection node of the switches S1 and S2 are coupled to a port P1, and the connection node of the switches S3 and S4 are coupled to a port P2. Refer to FIGS. 6A and 6B in conjunction with FIG. 5. Regarding the submodule SM of the upper bridge arm in FIG. 5, the port P1 of the submodule SM is coupled to the port P2 of the neighboring submodule SM or the positive line 31, and the port P2 of the submodule SM is coupled to the port P1 of the neighboring submodule SM or the inductor L. Regarding the submodule SM of the lower bridge arm in FIG 5, the port P1 of the submodule SM is coupled to the port P2 of the neighboring submodule SM or the inductor L, and the port P2 of the submodule SM is coupled to the port P1 of the neighboring submodule SM or the negative line 32.

The capacitor Csm of each submodule SM may be controlled to stabilize a voltage Vsm across the capacitor Csm. In the embodiment, the modulation index M of the first stage 1 is defined in equation (1).

$$M = \frac{2Vac}{Vdc} \qquad (1)$$

In equation (1), Vac represents the peak value of the AC voltage provided by the AC source Vac, and Vdc represents the voltage across the first DC bus 3. In the embodiment, the modulation index is the ratio of twice AC voltage provided by the AC power to voltage across the first DC bus 3.

Neglecting the voltage across the inductor L, the bridge arm voltage Varm of each upper or lower bridge arm may be calculated as equation (2), where $\omega$ represents the angular frequency.

$$Varm = 0.5Vdc - Vac \cdot \sin(\omega t) = \frac{Vac}{4M} - Vac \cdot sin(\omega t) \qquad (2)$$

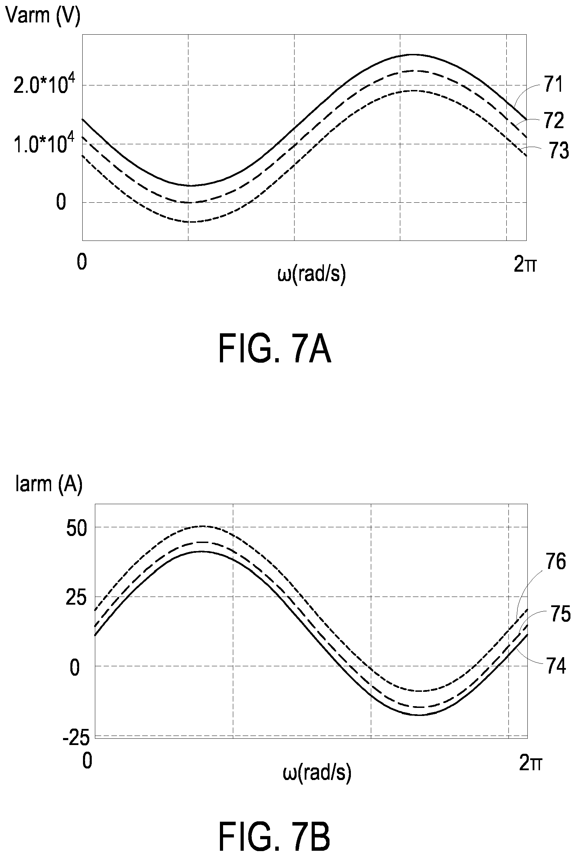

The simulation waveforms of the bridge arm voltage Varm under different modulation indexes M are plotted in FIG. 7A. In FIG. 7A, waveforms 71, 72, and 73 represent the bridge arm voltage Varm under modulation indexes M equal to 0.8, 1 and 1.4, respectively. As shown in FIG. 7A, the bridge arm voltage Varm appears negative value when the modulation index M is higher than 1.

The number N of submodules SM in each upper or lower bridge arm is determined by the maximum bridge arm voltage stress.

$$N = \left\lceil \frac{\max(Varm)}{Vsm} \right\rceil \qquad (3)$$

According to equation (3), a higher modulation index M indicates the lower peak of bridge arm voltage Varm as well as the lower number N of submodules SM.

The bridge arm current Iarm flowing through each upper or lower bridge arm could be calculated as:

$$Iarm = \frac{Idc}{3} + 0.5Iac \cdot \sin(\omega t) = \frac{M}{4}Iac + 0.5Iac \cdot sin(\omega t) \qquad (4)$$

In equation (4), Idc is the current flowing through the first DC bus 3, and Iac is the current provided by the AC source Vac. According to equation (4), when the modulation index M increases, the root-mean-square value of the bridge arm current Iarm becomes higher. The simulation waveforms of the bridge arm current Iarm under different modulation indexes M are plotted in FIG. 7B. In FIG. 7B, waveforms 74, 75 and 76 represent the bridge arm current Iarm under modulation indexes M equal to 0.8, 1 and 1.4, respectively.

Based on equations (2) and (4), the bridge arm power Parm of each upper or lower bridge arm could be calculated as:

$$Parm = Varm \cdot Iarm = \frac{Idc \cdot Vdc}{2} - \frac{Vac \cdot Iac}{4} + \left(\frac{1}{2M} - \frac{M}{4}\right) Iac \cdot Vac \cdot$$

$$sin(\omega t) + \frac{Vac \cdot Iac}{4}\cos(2\omega t) \qquad (5)$$

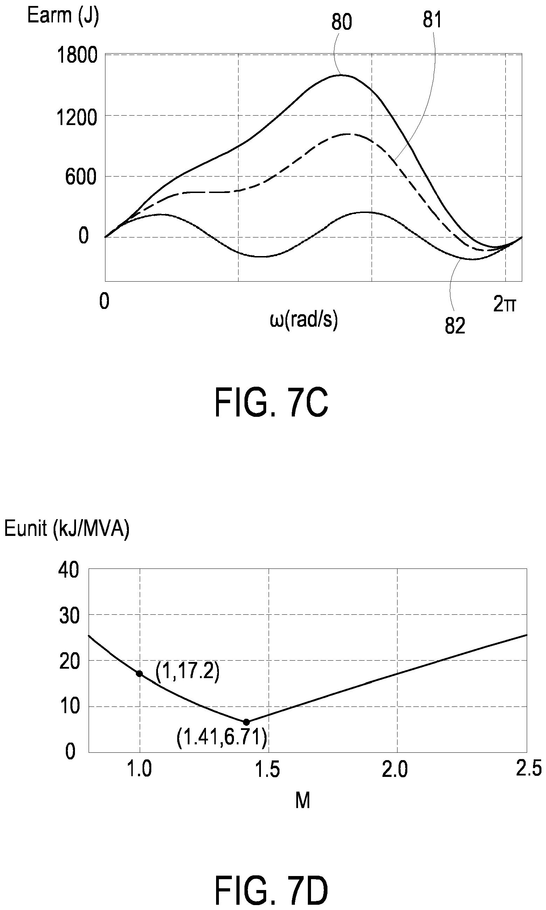

In equation (5), the DC term would be cancelled naturally, while the amplitude of the line-frequency term is greatly impacted by the modulation index M. When M=1.4, the coefficient substantially becomes zero. Therefore, the bridge arm energy Earm, which equals the integral of bridge arm power Parm (equation (6)), has the minimum ripple. The simulation waveforms of the bridge arm energy Earm under different modulation indexes M are plotted in FIG. 7C. In FIG. 7C, waveforms 80, 81 and 82 represent the bridge arm energy Earm under modulation indexes M equal to 0.8, 1 and 1.4, respectively.

$$Earm = \int Parmdt \qquad (6)$$

Since the capacitor Csm of submodule SM confronts the line frequency energy ripple and should be large enough to suppress the voltage ripple, the capacitor Csm greatly impacts the power density of submodule SM. Therefore, the energy storage requirement Eunit is usually applied and could be calculated as:

$$Eunit = \frac{3\Delta Earm}{2\varepsilon S} = \frac{3(Earm,max - Earm,min)}{2\varepsilon S} \qquad (7)$$

In equation (7), $\Delta E_{arm}$ denotes the energy ripple across each upper or lower bridge arm and can be calculated as the difference between the maximum value Earm,max and the minimum Earm,min of the bridge arm energy Earm. Moreoever, $\varepsilon$ refers to the desired voltage ripple coefficient, and S means the apparent power of the whole system.

Using the ideal waveform, the relationship between the energy storage requirement Eunit and the modulation index M at unity power factor are plotted in FIG. 7D. It can be observed that when the modulation index M is around 1.41, the energy storage requirement Eunit reaches 6.71 kJ/MVA, which is only 39% of that with M=1. Therefore, the high modulation index M helps to reduce the energy storage requirement Eunit. Moreover, the higher modulation index M leads to the lower voltage Vdc across the first DC bus 3, which also reduces the insulation voltage required for the transformer TR in the second stage 2.

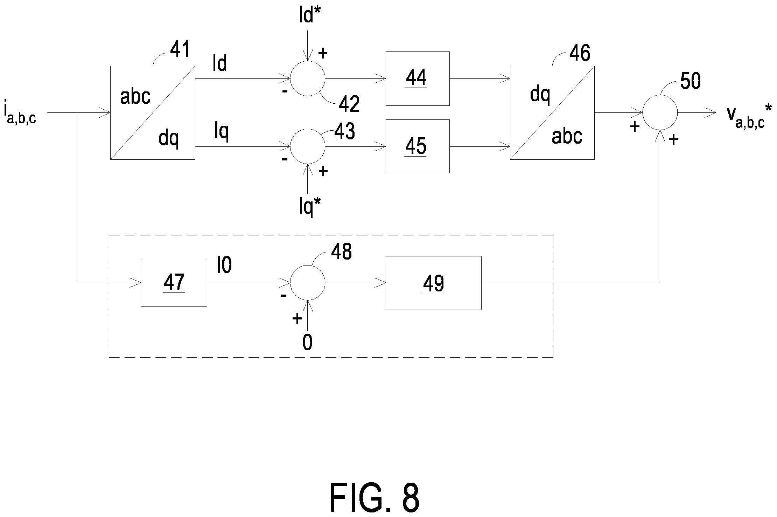

Refer to FIG. 3 again. The impedance of the zero-sequence loop mainly depends on the impedance Z2, and a zero-sequence current may flow through the midpoint O and a neutral point of the AC source Vac when the impedances Z2 and Z1 are low. FIG. 8 schematically shows a flow chart of a zero-sequence current suppression method and corresponding architecture of a controller of the solid-state transformer according to an embodiment of the present disclosure. As shown in FIG. 8, the three-phase currents $i_{a,b,c}$ of the AC source Vac are measured and fed into two different paths to achieve three-phase reference voltages $v_{a,b,c}{}^*$. In specific, through the upper path, firstly, the three-phase currents $i_{a,b,c}$ are transformed into a d-axis current Id and a q-axis current Iq by a converter 41. Then, the d-axis current Id and the q-axis current Iq are compared with their respective reference values Id* and Iq* to generate error signals by comparators 42 and 43. Afterwards, the error signals from the comparators 42 and 43 are respectively processed by two proportional-integral (PI) controllers 44 and 45 to generate control signals for the d-axis and q-axis. Finally, the control signals from the PI controllers 44 and 45 are transformed back into three-phase voltage signals by a converter 46. In addition, through the lower path, firstly, the three-phase currents $i_{a,b,c}$ are summed up to generate a zero-sequence current I0 by a calculator 47. Then, the zero-sequence current I0 is compared with zero to generate a difference by a comparator 48. Afterwards, the difference from the comparator 48 is processed by a regulator 49 to generate a regulation value utilized for suppressing the zero-sequence current, and the regulator 49 may be implemented by a proportional resonant or repetitive control regulator. The outputs of the two paths, namely the three-phase voltage signals from the converter 46 and the regulation value from the regulator 49, are summed up by an adder 50 to generate the three-phase reference voltages $v_{a,b,c}{}^*$. It should be noted that the converters, comparators, PI controllers, calculator, regulator, and adder shown FIG. 8 may be implemented as hardware or software modules. If implemented as hardware, they can be realized by separate hardware components or integrated into a smaller number of hardware units.

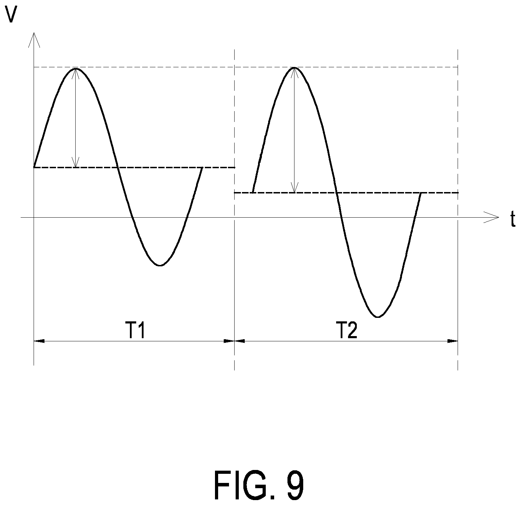

FIG. 9 schematically shows the variation of bridge arm voltage Varm when a single-phase-ground (SPG) short circuit fault occurs on the AC side of the first stage 1 in case of low impedance Z1. In FIG. 9, the waveform of bridge arm voltage Varm is depicted by solid lines, the magnitude of 0.5 * Vdc is depicted by dashed lines, T1 represents the period under normal operation, and T2 represents the period during the SPG short circuit fault. When a SPG short circuit fault occurs in one phase, the voltage amplitude of the other two phases would increase, and the increment depends on the impedance Z2 (i.e., the grounding impedance of the AC source Vac as shown in FIG. 3). According to equation (2), the voltage Vdc across the first DC bus 3 decreases correspondingly so that the peak value of the bridge arm voltage Varm under SPG short circuit fault does not exceed that under the normal operation. During the SPG short circuit fault, the number of submodules SM of each upper or lower bridge arm should be sufficient to handle the negative overvoltage of AC power. Then, the grounding current could be controlled to be zero, which means the first stage 1 rides through the SPG short circuit fault. As for the second stage 2, since the voltage Vdc across the first DC bus 3 reduces, the transformer TR in the second stage 2 doesn't have an overvoltage concern that exists in the conventional approaches.

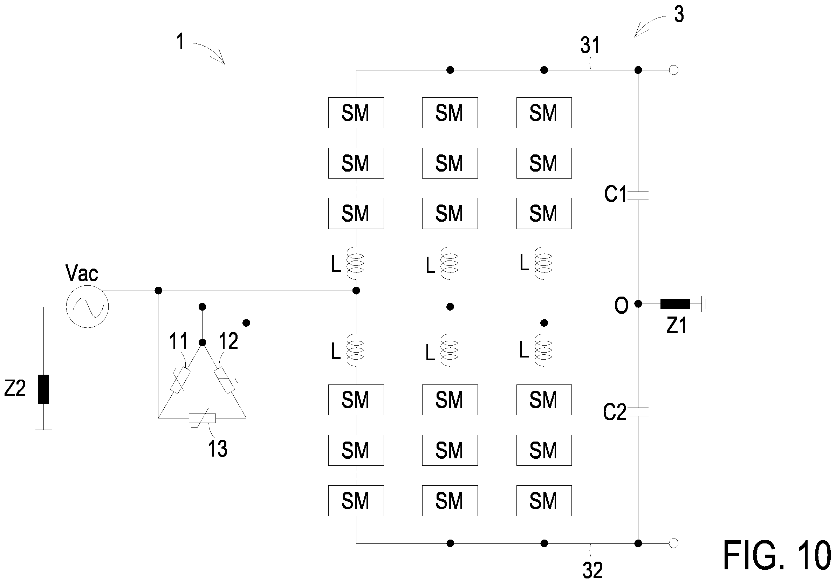

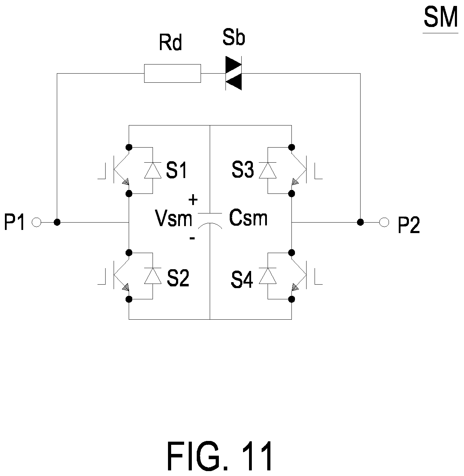

Taking the implementation of the first stage 1 in FIG. 5 as an example, the first stage 1 further includes three varistors 11, 12, and 13 applied to the input of first stage 1 for lightning protection, as exemplified in FIG. 10. Accordingly, the overvoltage from the lightning could be clamped. The three varistors 11, 12, and 13 may be connected in Δ-connection as shown in embodiment of FIG. 10, or may be connected in Y-connection in another embodiment. The varistors 11, 12, and 13 are for example but not limited to metal-oxide varistors. Furthermore, taking the full-bridge submodules SM in FIG. 6B as an example, a damping resistor Rd and a bypass switch Sb may be applied in each submodule SM to avoid the overcharging of the capacitor, as exemplified in FIG. 11. As shown in FIG. 11, the damping resistor Rd and the bypass switch Sb are electrically connected between the ports P1 and P2 of the submodule SM. For instance, the bypass switch Sb may include a bidirectional semiconductor device (e.g., IGBT), a thyristor, or a mechanical switch.

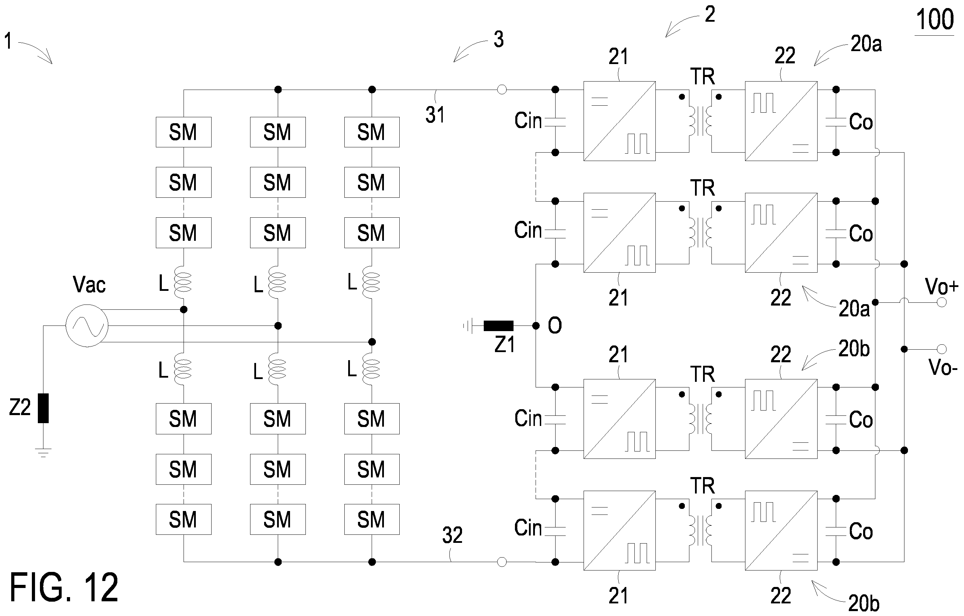

FIG. 12 is a schematic circuit diagram illustrating a solid-state transformer according to another embodiment of the present disclosure. The component parts and elements corresponding to those of FIG. 3 and FIG. 5 are designated by identical numeral references, and detailed descriptions thereof are omitted herein. In the solid-state transformer 100 of this embodiment, the second stage 2 includes a plurality of DC/DC conversion modules 20, and the plurality of DC/DC conversion modules 20 are divided into first and second DC/DC conversion modules 20a and 20b according to the disposing position. In specific, the second stage 2 includes a plurality of first DC/DC conversion modules 20a and a plurality of second DC/DC conversion modules 20b. The inputs of the plurality of first DC/DC conversion modules 20a are electrically connected in series between the positive line 31 of the first DC bus 3 and the midpoint O, the inputs of the plurality of second DC/DC conversion modules 20b are electrically connected in series between the midpoint O and the negative line 32 of the first DC bus 3, and the outputs of all the first and second DC/DC conversion modules 20a and 20b are electrically connected in parallel and coupled to the positive and negative terminals Vo+ and Vo- of the second DC bus. The ISOP (input-series-output-parallel) configuration in this embodiment could be used to handle the voltage Vdc across the first DC bus 3 and the large current in the second DC bus. In an embodiment, the first and second DC/DC conversion modules 20a and 20b have the same number, and the total number thereof is determined by the voltage Vdc across the first DC bus 3 and is calculated as:

$$X = \frac{Vdc}{Vdc\_module} \tag{8}$$

In equation (8), X represents the total number of the first and second DC/DC conversion modules 20a and 20b, and Vdc_module represents the voltage handled by each of the first and second DC/DC conversion modules 20a and 20b.

In an embodiment, the input of each of the first and second DC/DC conversion modules 20a and 20b may be electrically connected in parallel to an input capacitor Cin, and the output of each of the first and second DC/DC conversion modules 20a and 20b may be electrically connected in parallel to an output capacitor Co.

Depending on the port requirement of the DC system connected to the second DC bus, there may have different configurations for the output of the second stage 2.

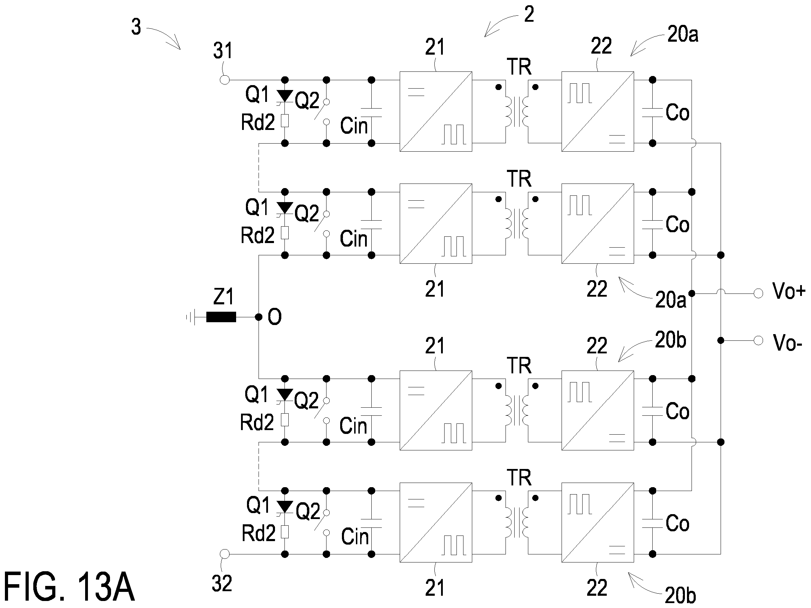

FIG. 13A schematically shows the second stage of FIG. 12 with a two-wire output configuration. As shown in FIG. 13A, the output of the AC/DC conversion circuit 22 of each of the first and second DC/DC conversion modules 20a and 20b adopts two-wire configuration. In other words, the output of each AC/DC conversion circuit 22 has two terminals electrically connected to the positive and negative terminals Vo+ and Vo- of the second DC bus respectively. Under this circumstance, each DC/DC conversion module may provide a unipolar output or a bipolar output.

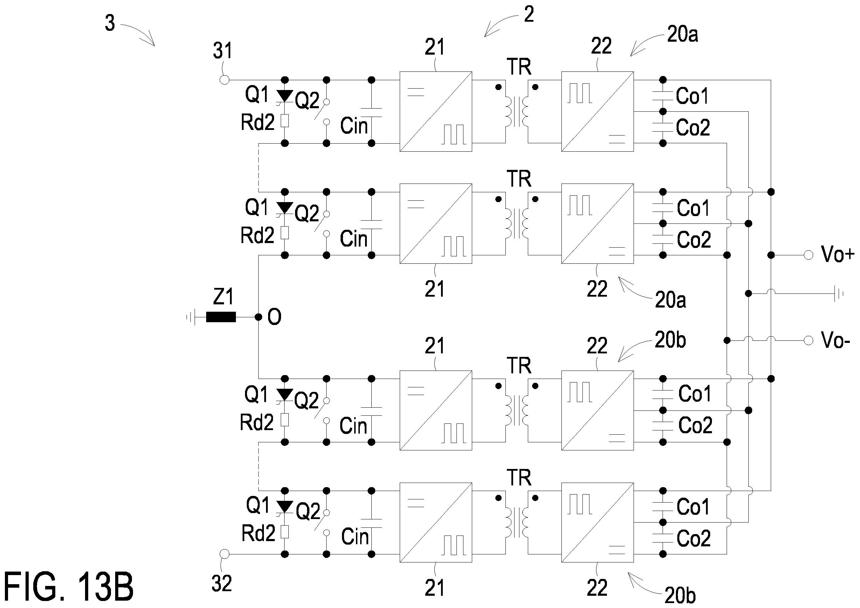

FIG. 13B schematically shows the second stage of FIG. 12 with a three-wire output configuration. As shown in FIG. 13B, the output of the AC/DC conversion circuit 22 of each of the first and second DC/DC conversion modules 20a and 20b adopts three-wire configuration. In other words, the output of each AC/DC conversion circuit 22 has three terminals electrically connected to the ground terminal and the positive and negative terminals Vo+ and Vo- of the second DC bus respectively. Under this circumstance, each DC/DC conversion module may provide a bipolar output.

In addition, the redundancy design is possible for such kind of ISOP structure to improve reliability. Therefore, in an embodiment, a bypass circuit may be electrically connected in parallel to the input of each DC/DC conversion module. Refer to FIG. 13A again. Taking the bypass circuit corresponding to the top one of the first DC/DC conversion modules 20a in FIG. 13A as an example, the bypass circuit includes a switch Q1, a damping resistor Rd2 and a switch Q2. The switch Q1 and the damping resistor Rd2 are electrically connected in series to form a branch, which is electrically connected in parallel to the switch Q2 and the input of the first DC/DC conversion module 20a. Preferably, the switch Q1 is a semiconductor switch, and the switch Q2 is a mechanical switch, but not exclusively. Consequently, the solid-state transformer 100 can operate with fault DC/DC conversion modules in the second stage 2. For example, when faults occur in a DC/DC conversion module, the fault DC/DC conversion module can be bypassed by turning on the switches Q1 and Q2. Therefore, the reliability of the solid-state transformer 100 is improved.

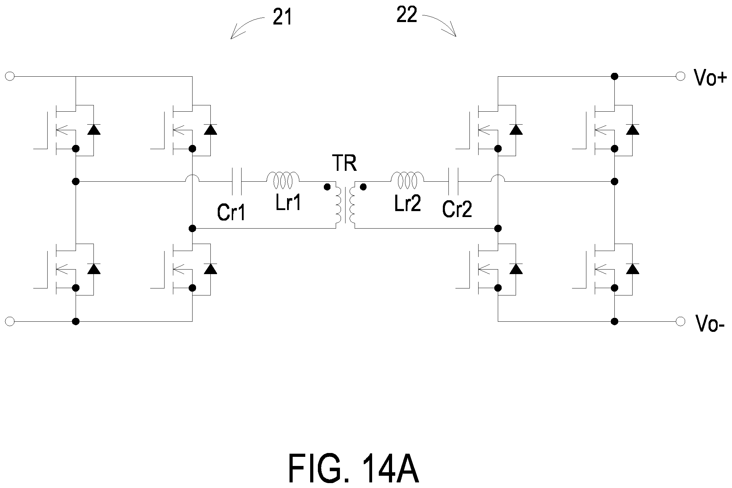

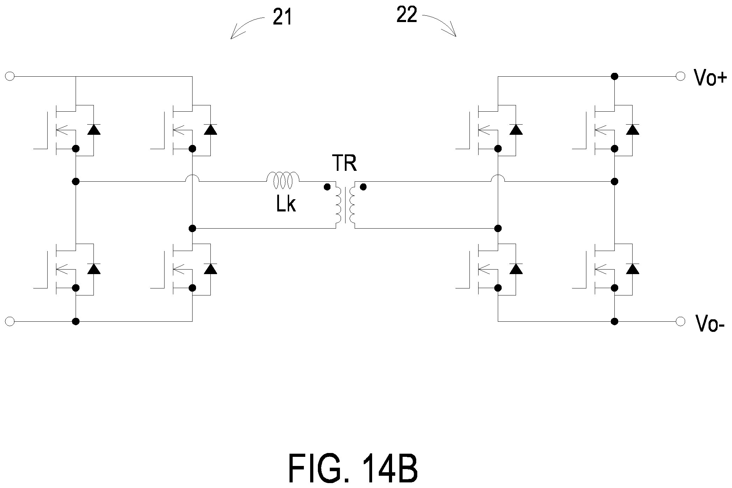

For the second stage 2 with two-wire output configuration, two possible implementations of the DC/DC conversion module (20a or 20b) of FIG. 13A are exemplified in FIG. 14A and FIG. 14B.

In the implementation shown in FIG. 14A, each of the first and second DC/DC conversion modules 20a and 20b includes a two-level CLLC resonant converter. The DC/AC conversion circuit 21 includes two primary switch bridge arms electrically connected in parallel, and each primary switch bridge arm includes two serially-connected switches. The DC/AC conversion circuit 21 further includes a resonant capacitor Cr1 and a resonant inductor Lr1 electrically connected in series between a connection node of the switches of one primary switch bridge arm and a first terminal of a primary winding of the transformer TR. The second terminal of the primary winding of the transformer TR is coupled to a connection node of the switches of the other primary switch bridge arm. The AC/DC conversion circuit 22 includes two secondary switch bridge arms electrically connected in parallel, and each secondary switch bridge arm includes two serially-connected switches. The AC/DC conversion circuit 22 further includes a resonant capacitor Cr2 and a resonant inductor Lr2 electrically connected in series between a connection node of the switches of one secondary switch bridge arm and a first terminal of a secondary winding of the transformer TR. The second terminal of the secondary winding of the transformer TR is coupled to a connection node of the switches of the other secondary switch bridge arm. Two output terminals of the AC/DC conversion circuit 22 are electrically connected to the positive and negative terminals Vo+ and Vo- of the second DC bus, respectively.

In the implementation shown in FIG. 14B, each of the first and second DC/DC conversion modules 20a and 20b includes a dual-active-bridge converter. The components and connection relations are similar with that of FIG. 14A except that the first terminal of the primary winding of the transformer TR is coupled to the connection node of the primary switch bridge arm of the DC/AC conversion circuit 21 through an inductor Lk, and the first terminal of the secondary winding of the transformer TR is coupled to the connection node of secondary switch bridge arm of the AC/DC conversion circuit 22. Two output terminals of the AC/DC conversion circuit 22 are electrically connected to the positive and negative terminals Vo+ and Vo- of the second DC bus, respectively

It is noted that the possible topology of the DC/DC conversion module of FIG. 13A is not limited to the implementations shown in FIG. 14A and FIG. 14B. For example, the DC/DC conversion module of FIG. 13A may adopt any suitable three-level or three-phase circuit topology.

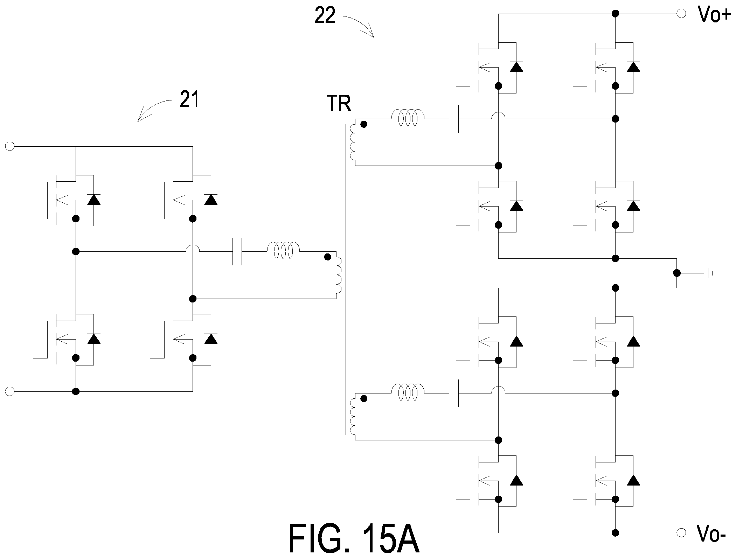

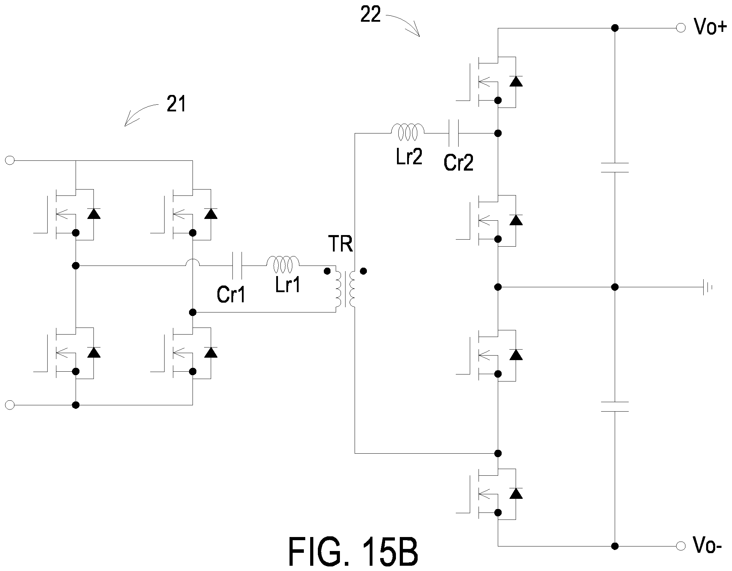

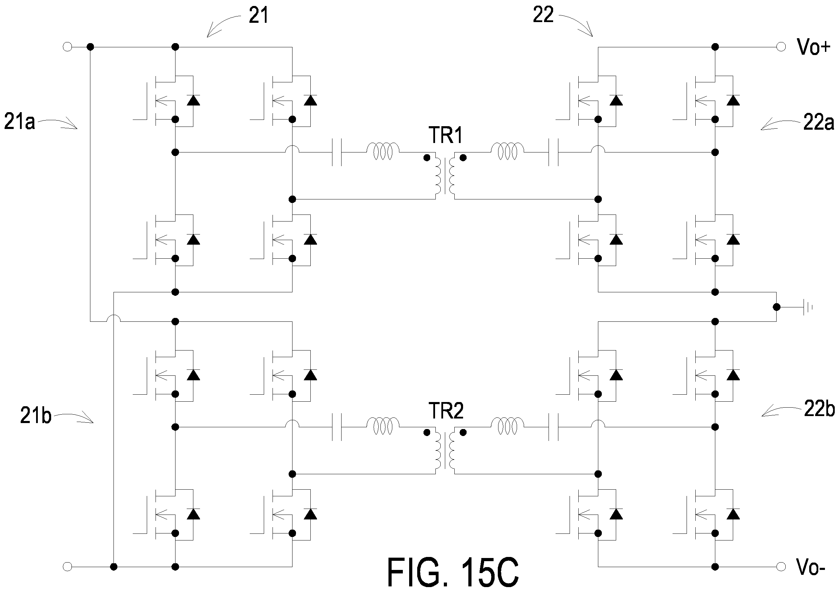

For the second stage 2 with three-wire output configuration, three possible implementations of the DC/DC conversion module (20a or 20b) of FIG. 13B are exemplified in FIG. 15A, FIG. 15B and FIG. 15C.

In the implementation shown in FIG. 15A, the transformer TR may be a three-winding transformer used to interface three full-bridges. The structure of DC/AC conversion circuit 21 is similar to that in FIG. 14A. The AC/DC conversion circuit 22 includes two full-bridge circuits connected to two secondary windings of the transformer TR, and each full-bridge circuit has the structure similar with the secondary circuit in FIG. 14A. Two output terminals of one full-bridge circuit of the AC/DC conversion circuit 22 are electrically connected to the positive terminals Vo+ of the second DC bus and the ground terminal, respectively. Two output terminals of the other full-bridge circuit of the AC/DC conversion circuit 22 are electrically connected to the ground terminal and the negative terminal Vo- of the second DC bus, respectively. Accordingly, in this implementation, the second stage 2 provides a bipolar output.

In the implementation shown in FIG. 15B, the structure of DC/AC conversion circuit 21 is similar to that in FIG. 15A, and the AC/DC conversion circuit 22 adopts a series H-bridge structure. In particular, the AC/DC conversion circuit 22 includes four serial-connected switches, a resonant inductor Lr2 and a resonant capacitor Cr2. The connection node of the first and second switches is electrically connected to a first terminal of a secondary winding of the transformer TR through the resonant inductor Lr2 and the resonant capacitor Cr2, and the connection node of the third and fourth switches is electrically connected to a second terminal of the secondary winding of the transformer TR. The AC/DC conversion circuit 22 further includes one capacitor electrically connected in parallel to the first and second switches and another capacitor electrically connected in parallel to the third and fourth switches. The first switch is electrically connected to the positive terminal Vo+ of the second DC bus, the connection node of the second and third switches is electrically connected to the ground terminal, and the fourth switch is electrically connected to the negative terminal Vo-of the second DC bus. Accordingly, in this implementation, the second stage 2 provides a bipolar output.

In the implementation shown in FIG. 15C, the DC/AC conversion circuit 21 includes a first primary circuit 21a and a second primary circuit 21b, the transformer TR includes a first transformer TR1 and a second transformer TR2, and the AC/DC conversion circuit 22 includes a first secondary circuit 22a and a second secondary circuit 22b. The first transformer TR1 is coupled between the first primary circuit 21a and the first secondary circuit 22a, and the second transformer TR2 is coupled between the second primary circuit 21b and the second secondary circuit 22b. Each of the first and second primary circuits 21a and 21b has the structure similar to that of the DC/AC conversion circuit 21 in FIG. 14A, and the inputs of the first and second primary circuits 21a and 21b are electrically connected in parallel. Each of the first and second secondary circuits 22a and 22b has the structure similar to that of the AC/DC conversion circuit 22 in FIG. 14B. Two output terminals of the first secondary circuit 22a are electrically connected to the positive terminal Vo+ of the second DC bus and the ground terminal respectively. Two output terminals of the second secondary circuit 22b are electrically connected to the ground terminal and the negative terminal Vo- of the second DC bus respectively. Accordingly, in this implementation, the second stage 2 provides a bipolar output.

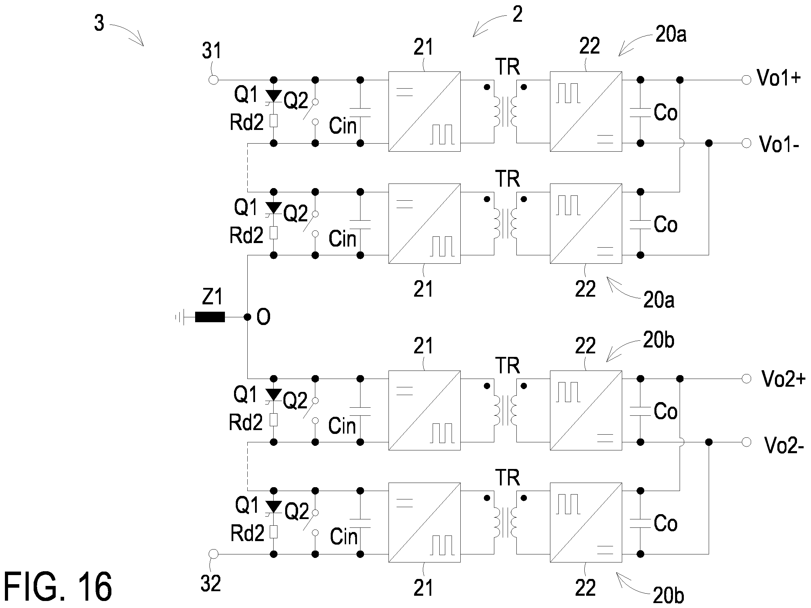

In addition, in the above embodiments, all the first and second DC/DC conversion modules 20a and 20b are electrically connected to the same second DC bus, namely the second stage 2 provides one output for one DC system. However, the present disclosure is not limited thereto. In another embodiment, the DC/DC conversion modules may provide different outputs to different DC systems (DC loads) through different second DC buses. For example, in an embodiment, as shown in FIG. 16, the outputs of the plurality of first DC/DC conversion modules 20a may be electrically connected in parallel and coupled to a positive terminal Vo1+ and a negative terminal Vo1- of one second DC bus, and the outputs of the plurality of second DC/DC conversion modules 20b may be electrically connected in parallel and coupled to a positive terminal Vo2+ and a negative terminal Vo2-of another second DC bus.

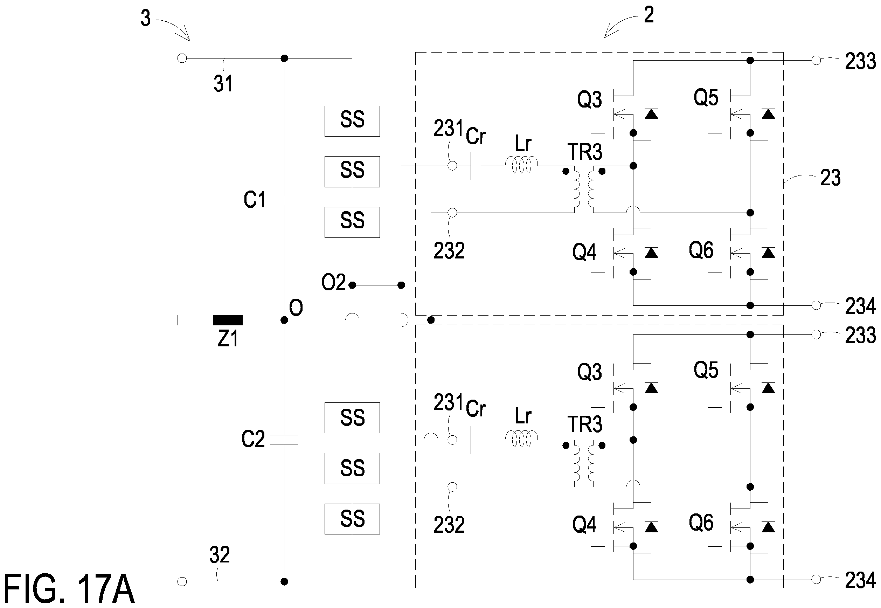

FIG. 17A schematically shows another implementation of the second stage of the solid-state transformer of the present disclosure. In this implementation, as shown in FIG. 17A, the second stage 2 includes a modular multilevel resonant converter. Specifically, the second stage 2 includes a plurality of switch modules SS and a plurality of conversion units 23 (exemplified by two conversion units 23 in the figure). Half of the switch modules SS are electrically connected in series between the positive line 31 of the first DC bus 3 and a midpoint O2, and the other half of the switch modules SS are electrically connected in series between the midpoint O2 and the negative line 32 of the first DC bus 3. Each conversion unit 23 has a first input terminal 231, a second input terminal 232, a first output terminal 233 and a second output terminal 234, and includes a resonant tank, a transformer TR3 and a full-bridge circuit. In specific, in each conversion unit 23, a resonant inductor Lr and a resonant capacitor Cr of the resonant tank are electrically connected in series between the first input terminal 231 and a first terminal of a primary winding of the transformer TR3, and a second terminal of the primary winding of the transformer TR3 is electrically connected to the second input terminal 232. The full-bridge circuit includes two parallel-connected bridge arms, where one bridge arm includes switches Q3 and Q4 connected in series, and the other bridge arm includes switches Q5 and Q6 connected in series. Two terminals of a secondary winding of the transformer TR3 are respectively connected to a connection node of the switches Q3 and Q4 and a connection node of the switches Q5 and Q6.

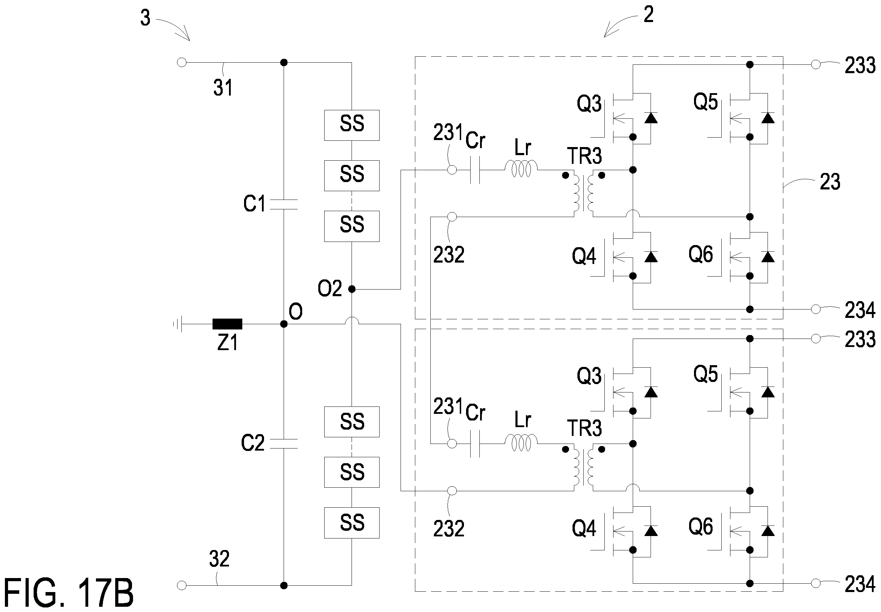

The inputs of the conversion units 23 may be electrically connected in series or parallel. For example, in the embodiment shown in FIG. 17A, the inputs of the conversion units 23 are electrically connected in parallel. In specific, the first input terminals 231 of the conversion units 23 are all connected to the midpoint O2, and the second input terminals 232 of the conversion units 23 are all connected to the midpoint O. In another embodiment, as shown in FIG. 17B, the inputs of the conversion units 23 are electrically connected in series between the midpoint O and the midpoint O2. In specific, the first input terminal 231 of the first one of the conversion units 23 is connected to the midpoint O2, and the second input terminal 232 of the last one of the conversion units 23 is connected to the midpoint O. Among two neighboring conversion units 23, the first input terminal 231 of one conversion unit 23 is connected to the second input terminal 232 of the other conversion unit 23. Depending on the DC systems powered by the solid-state transformer 100, the first and second output terminals 233 and 234 of different conversion units 23 may be electrically connected to same second DC bus or different second DC buses.

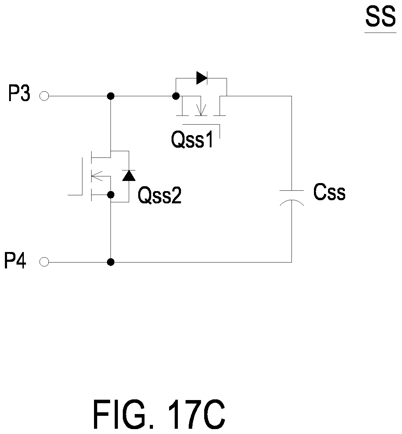

FIG. 17C is a schematic circuit diagram illustrating the switch module SS of the second stage 2 of FIG. 17A and FIG. 17B. In an embodiment, as shown in FIG. 17C, each switch module SS has ports P3 and P4 and includes a capacitor Css and switches Qss1 and Qss2. A first terminal of the switch Qss1 is electrically connected to the port P3 and a first terminal of the switch Qss2, a second terminal of the switch Qss1 is electrically connected to a positive terminal of the capacitor Css, and a negative terminal of the capacitor Css is electrically connected to a second terminal of the switch Qss2 and the port P4. The capacitor Css has a rated voltage Vss. Pleaser refer to FIG. 17C in conjunction with FIG. 17A. The number of the switch modules SS could be determined by dividing the voltage Vdc across the first DC bus 3 by the rated voltage Vss.

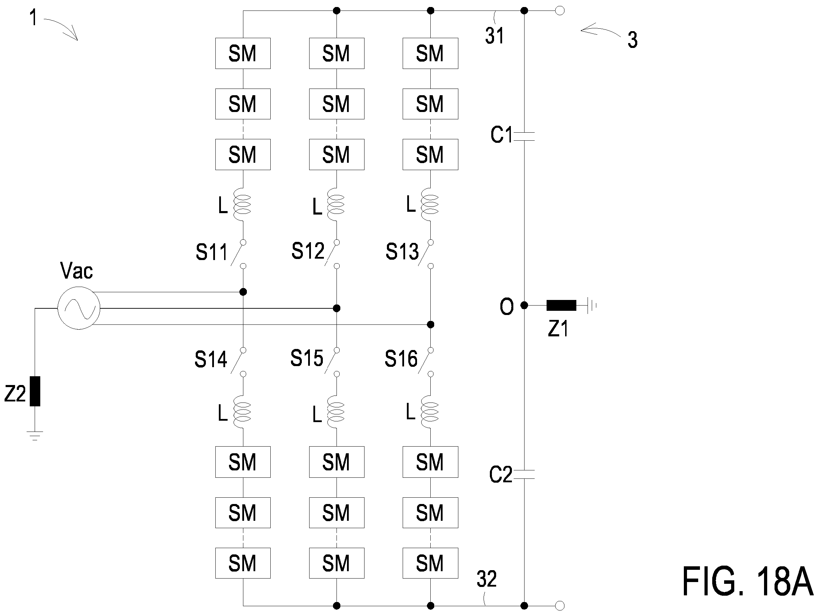

FIG. 18A schematically shows another implementation of the first stage of the solid-state transformer in the present disclosure. The component parts and elements corresponding to those of FIG. 5 are designated by identical numeral references, and detailed descriptions thereof are omitted herein. In FIG. 18A, the three upper bridge arms, from left to right, are referred as the first, second and third upper bridge arms, respectively, and the three lower bridge arms, from left to right, are referred as the first, second and third lower bridge arms, respectively. Different from the embodiment of FIG. 5, in this embodiment, each of the three upper bridge arms and the three lower bridge arms further includes a switch connected between the inductor L and the corresponding phase of the AC source Vac. Specifically, the inductors L of the first upper and lower bridge arms are electrically connected to the first phase of the AC source Vac through switches S11 and S14 respectively, the inductors L of the second upper and lower bridge arms are electrically connected to the second phase of the AC source Vac through switches S12 and S15 respectively, and the inductors L of the third upper and lower bridge arms are electrically connected to the third phase of the AC source Vac through switches S13 and S16 respectively.

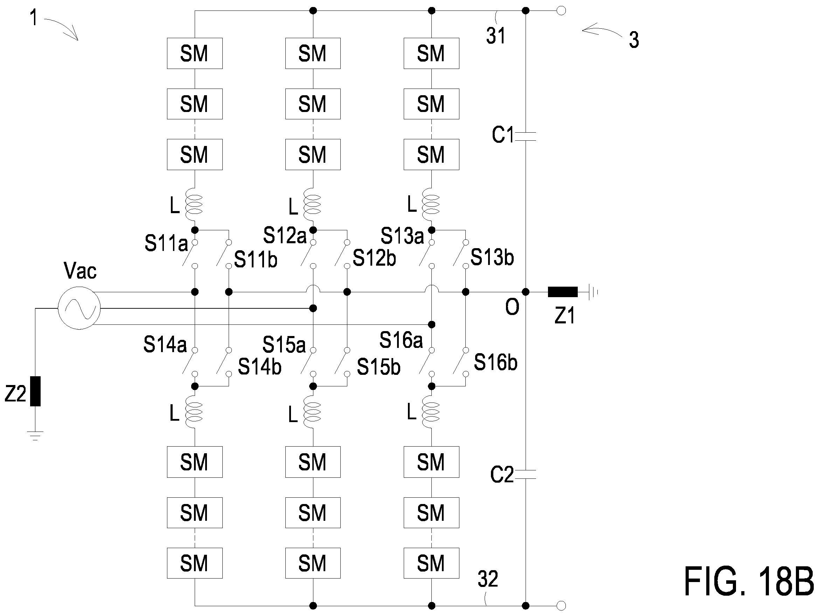

FIG. 18B schematically shows further another implementation of the first stage of the solid-state transformer in the present disclosure. The component parts and elements corresponding to those of FIG. 5 are designated by identical numeral references, and detailed descriptions thereof are omitted herein. Different from the embodiment of FIG. 5, in this embodiment, each of the three upper bridge arms and the three lower bridge arms further includes two switches, where one switch is connected between the inductor L and the corresponding phase of the AC source Vac, and the other switch is connected between the inductor and the midpoint O. In specific, the first upper bridge arm includes a switch S11a, electrically connected between the inductor L and the first phase of the AC source Vac, and a switch S11b, electrically connected between the inductor L and the midpoint O. The second upper bridge arm includes a switch S12a, electrically connected between the inductor L and the second phase of the AC source Vac, and a switch S12b, electrically connected between the inductor L and the midpoint O. The third upper bridge arm includes a switch S13a, electrically connected between the inductor L and the third phase of the AC source Vac, and a switch S13b, electrically connected between the inductor L and the midpoint O. The first lower bridge arm includes a switch S14a, electrically connected between the inductor L and the first phase of the AC source Vac, and a switch S14b, electrically connected between the inductor L and the midpoint O. The second lower bridge arm includes a switch S15a, electrically connected between the inductor L and the second phase of the AC source Vac, and a switch S15b, electrically connected between the inductor L and the midpoint O. The third lower bridge arm includes a switch S16a, electrically connected between the inductor L and the third phase of the AC source Vac, and a switch S16b, electrically connected between the inductor L and the midpoint O. In a word, in each upper or lower bridge arm, the inductor L is electrically connected to the corresponding phase of the AC source Vac through a switch and is electrically connected to the midpoint O through another switch.

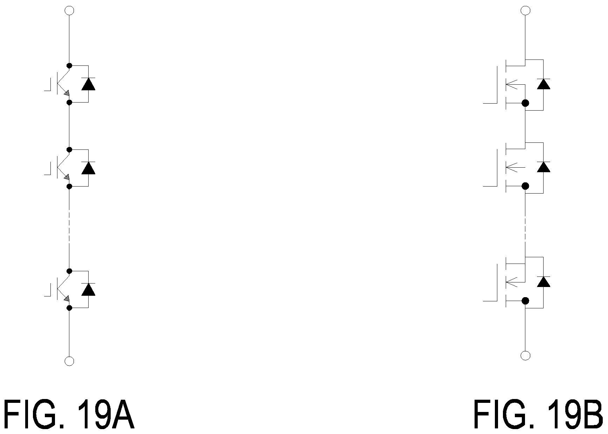

In the present embodiment, each of the foregoing switches of the upper and lower bridge arms shown in FIG. 18A and FIG. 18B may be formed by series-connected insulated gate bipolar transistors shown in FIG. 19A or by series-connected metal-oxide-semiconductor field-effect transistors shown in FIG. 19B.

## Claims

1.   A solid-state transformer (100), **characterized by** comprising:

   a first stage (1), configured to receive an AC power and convert the AC power into a first DC power;
   a first DC bus (3), electrically connected to the first DC power; and
   a second stage (2), electrically connected to the first stage (1) through the first DC bus (3), and configured to perform isolated step-down DC/DC conversion on the first DC power to generate a second DC power,
   wherein the first stage (1) is configured to operate at a modulation index (M) higher than 1, wherein the modulation index (M) is defined by a ratio of twice AC voltage provided by the AC power to voltage across the first DC bus (3).

2.   The solid-state transformer (100) according to claim 1, further comprising two capacitors (C1, C2) electrically connected in series across the first DC bus (3) and a midpoint (O) between the two capacitors (C1, C2).

3.   The solid-state transformer (100) according to claim 2, wherein the midpoint (O) is grounded by solid grounding, low-impedance grounding, high-impedance grounding, resonant grounding or direct grounding.

4.   The solid-state transformer (100) according to claim 1, wherein the second stage (2) comprises DC/DC conversion modules (20) electrically connected to the first DC bus (3), and inputs of the DC/DC conversion modules (20) are electrically connected in parallel.

5.   The solid-state transformer (100) according to claim 4, wherein outputs of the DC/DC conversion modules (20) are electrically connected to different second DC buses.

6.   The solid-state transformer (100) according to claim 4, wherein outputs of the DC/DC conversion modules (20) are electrically connected in parallel and are connected to a second DC bus.

7.   The solid-state transformer (100) according to claim 4, further comprising a switch (SW1, SW2) electrically connected between the first DC bus (3) and each of the DC/DC conversion modules (20), wherein the switch (SW1, SW2) is configured to be controlled to enable or disable a corresponding one of the DC/DC conversion modules (20).

8.   The solid-state transformer (100) according to claim 1, wherein the second stage (2) comprises first DC/DC conversion modules (20a) and second DC/DC conversion modules (20b), inputs of the first DC/DC conversion modules (20a) are electrically connected in series between a positive line (31) of the first DC bus (3) and a midpoint (O), and inputs of the second DC/DC conversion modules (20b) are electrically connected in series between a negative line (32) of the first DC bus (3) and the midpoint (O).

9. The solid-state transformer (100) according to claim 8, wherein an output of each of the first DC/DC conversion modules (20a) and the second DC/DC conversion modules (20b) is unipolar or bipolar, and has two terminals electrically connected to a positive terminal (Vo+) and a negative terminal (Vo-) of a second DC bus, respectively.

10. The solid-state transformer (100) according to claim 8, wherein an output of each of the first DC/DC conversion modules (20a) and the second DC/DC conversion modules (20b) is bipolar, and has three terminals electrically connected to a positive terminal (Vo+) and a negative terminal (Vo-) of a second DC bus and a ground terminal, respectively.

11. The solid-state transformer (100) according to claim 8, wherein outputs of the first DC/DC conversion modules (20a) and the second DC/DC conversion modules (20b) are electrically connected in parallel and are connected to a second DC bus.

12. The solid-state transformer (100) according to claim 8, wherein outputs of the first DC/DC conversion modules (20a) are electrically connected in parallel and are connected to a second DC bus, and outputs of the second DC/DC conversion modules (20b) are electrically connected in parallel and are connected to a third DC bus.

13. The solid-state transformer (100) according to claim 8, further comprising a bypass circuit electrically connected in parallel to each of the inputs of the first DC/DC conversion modules (20a) and the second DC/DC conversion modules (20b), wherein the bypass circuit comprises a first switch (Q1), a damping resistor (Rd2) and a second switch (Q2), and the second switch (Q2) is electrically connected in parallel to a branch formed by the first switch (Q1) and damping resistor (Rd2) connected in series.

14. The solid-state transformer (100) according to claim 1, further comprising two capacitors (C1, C2) electrically connected in series across the first DC bus (3) and a first midpoint (O) between the two capacitors (C1, C2), wherein the second stage (2) comprises first switch modules (SS), second switch modules (SS), a second midpoint (O2) and conversion units (23), the first switch modules (SS) are electrically connected in series between a positive line (31) of the first DC bus (3) and the second midpoint (O2), the second switch modules (SS) are electrically connected in series between the second midpoint (O2) and a negative line (32) of the first DC bus (3), inputs of the conversion units (23) are electrically connected in parallel, and each of the inputs has two terminals (231, 232) coupled to the first midpoint (O) and the second midpoint (O2) respectively.

15. The solid-state transformer (100) according to claim 1, further comprising two capacitors (C1, C2) electrically connected in series across the first DC bus (3) and a first midpoint (O) between the two capacitors (C1, C2), wherein the second stage (2) comprises first switch modules (SS), second switch modules (SS), a second midpoint (O2) and conversion units (23), the first switch modules (SS) are electrically connected in series between a positive line (31) of the first DC bus (3) and the second midpoint (O2), the second switch modules (SS) are electrically connected in series between the second midpoint (O2) and a negative line (32) of the first DC bus (3), and inputs of the conversion units (23) are electrically connected in series between the first midpoint (O) and the second midpoint (O2).

16. The solid-state transformer (100) according to claim 1, wherein the first stage (1) comprises three upper bridge arms and three lower bridge arms, each of the three upper bridge arms comprises an inductor (L) and submodules (SM) electrically connected in series between a positive line (31) of the first DC bus (3) and a corresponding phase of the AC power, and each of the three lower bridge arms comprises an inductor (L) and submodules (SM) electrically connected in series between a negative line (32) of the first DC bus (3) and a corresponding phase of the AC power.

17. The solid-state transformer (100) according to claim 16, wherein each of the submodules (SM) of each of the three upper bridge arms and the three lower bridge arms comprises a half-bridge circuit or a full-bridge circuit.

18. The solid-state transformer (100) according to claim 17, wherein each of the submodules (SM) of each of the three upper bridge arms and the three lower bridge arms has an input port (P1) and an output port (P2) and further comprises a damping resistor (Rd) and a bypass switch (Sb) electrically connected in series between the input port (P1) and the output port (P2).

19. The solid-state transformer (100) according to claim 16, wherein each of the three upper bridge arms and the three lower bridge arms further comprises a switch (S11), and in each of the three upper bridge arms and the three lower bridge arms, the inductor (L) is electrically connected to the corresponding phase of the AC power through the switch (S11).

20. The solid-state transformer (100) according to claim 16, wherein each of the three upper bridge arms and the three lower bridge arms further comprises a first switch (S11a) and a second switch (S11b), and the solid-state transformer (100) further comprises two capacitors (C1, C2) electrically connected in series across the first DC bus (3) and a midpoint (O) between the two capacitors (C1, C2), wherein in each of the three upper bridge arms and the three lower bridge arms, the inductor (L) is electrically connected to the corresponding phase of the AC power through the first switch (S11a), and the inductor (L) is electrically connected to the midpoint (O) through the second switch (S11b).

21. The solid-state transformer (100) according to claim 19 or 20, wherein the switch (S11, S11a, S11b) is formed by series-connected insulated gate bipolar transistors or series-connected metal-oxide-semiconductor field-effect transistors.

EP 4 611 244 A1

# FIG. 1A

FIG. 1B

FIG. 2

FIG. 3

FIG. 4

FIG. 5

SM

FIG. 6A

SM

FIG. 6B

EP 4 611 244 A1

Varm (V)

2.0*10⁴

1.0*10⁴

0

0          ω(rad/s)          2π

71
72
73

## FIG. 7A

Iarm (A)

50

25

0

-25

0          ω(rad/s)          2π

76
75
74

## FIG. 7B

FIG. 7C

FIG. 7D

FIG. 8

FIG. 9

EP 4 611 244 A1

FIG. 10

SM

Rd   Sb

S1   S3

P1   +
Vsm   Csm   P2
-

S2   S4

FIG. 11

FIG. 12

FIG. 13A

FIG. 13B

FIG. 14A

EP 4 611 244 A1

EP 4 611 244 A1

FIG. 14B

FIG. 15A

FIG. 15B

FIG. 15C

EP 4 611 244 A1

FIG. 16

FIG. 17A

FIG. 17B

EP 4 611 244 A1

SS

P3 ○────────●──────────

Qss1

Qss2

Css

P4 ○────────●──────────

# FIG. 17C

FIG. 18A

FIG. 18B

EP 4 611 244 A1

EP 4 611 244 A1

FIG. 19A

FIG. 19B

Europäisches
Patentamt

European
Patent Office

Office européen
des brevets

**EUROPEAN SEARCH REPORT**

Application Number

EP 25 16 0579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU JIAN ET AL: "A New Hybrid Modular Multilevel Rectifier as MVac-LVdc Active Front-End Converter for Fast Charging Stations and Data Centers", IEEE TRANSACTIONS ON POWER ELECTRONICS, INSTITUTE OF ELECTRICAL AND ELECTRONICS ENGINEERS, USA, vol. 38, no. 9, 5 June 2023 (2023-06-05), pages 11023-11037, XP011945944, ISSN: 0885-8993, DOI: 10.1109/TPEL.2023.3283469 [retrieved on 2023-06-06] * Subsection II. A. System Topology; Subsection II. D. Nonunity PF Operation and Working Range; Subsection III. D. AC Low Voltage Ride-Through and DC Fault Ride-Through; figures 1,3,4,11,12,20,25,26 * | 1-21 | INV. H02M3/335 H02M5/458 H02M7/483 H02M1/00 |
| A | ALLENDE FELIPE RUIZ ET AL: "Modeling of cross-circulating currents in a MMC with parallel connected submodules in Solid State Transformers", 2021 IEEE 30TH INTERNATIONAL SYMPOSIUM ON INDUSTRIAL ELECTRONICS (ISIE), IEEE, 20 June 2021 (2021-06-20), pages 1-6, XP034005085, DOI: 10.1109/ISIE45552.2021.9576241 [retrieved on 2021-10-14] * abstract; figure 1 * | 1-21 | TECHNICAL FIELDS SEARCHED (IPC) H02M |

-/--

The present search report has been drawn up for all claims

| Place of search | Date of completion of the search | Examiner |
|---|---|---|
| The Hague | 4 July 2025 | Kanelis, Konstantin |

EPO FORM 1503 03.82 (P04C01)

page 1 of 2

| | Europäisches Patentamt / European Patent Office / Office européen des brevets | **EUROPEAN SEARCH REPORT** | **Application Number** <br> EP 25 16 0579 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NEUNER D ET AL: "Analysis of a Solid-State Transformer Employing Capacitively Isolated Series-Stacked Converter Cells and a Single Medium-Frequency Transformer", 2023 IEEE 24TH WORKSHOP ON CONTROL AND MODELING FOR POWER ELECTRONICS (COMPEL), IEEE, 25 June 2023 (2023-06-25), pages 1-8, XP034406790, DOI: 10.1109/COMPEL52896.2023.10221174 [retrieved on 2023-08-23] * abstract; figure 2a * | 1-21 | |
| A | ZHOU JIANQIAO ET AL: "Operation and Control of Bipolar-Type Modular Solid State Transformer With Active Circulating Current Injection and Arm Voltage Adjusting Method", IEEE TRANSACTIONS ON POWER ELECTRONICS, INSTITUTE OF ELECTRICAL AND ELECTRONICS ENGINEERS, USA, vol. 37, no. 8, 18 February 2022 (2022-02-18), pages 9663-9673, XP011907738, ISSN: 0885-8993, DOI: 10.1109/TPEL.2022.3152377 [retrieved on 2022-02-18] * abstract; figure 4 * | 1-21 | **TECHNICAL FIELDS SEARCHED (IPC)** |

The present search report has been drawn up for all claims

| Place of search | Date of completion of the search | Examiner |
|---|---|---|
| The Hague | 4 July 2025 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2